# EUROPEAN PATENT APPLICATION

(11) **EP 4 783 309 A1**
(43) Date of publication of application: **29.07.2026**
(21) Application number: 25225452.9
(22) Date of filing: 19.12.2025
(51) Int. Cl.: H01M 50/103, H01M 50/15, H01M 50/342, H01M 50/176, H01M 50/55, H01M 50/553

(54) **SECONDARY BATTERY AND METHOD FOR MANUFACTURING SAME**

(30) Priority: 24.01.2025 KR 20250011234
(71) Applicant: SAMSUNG SDI CO., LTD., Yongin-si, Gyeonggi-do 17084 (KR)
(72) Inventor: PARK, Seeun, 17084 Yongin-Si, Gyeonggi-do (KR); YONG, Junsun, 17084 Yongin-Si, Gyeonggi-do (KR); BAE, Kwangsoo, 17084 Yongin-Si, Gyeonggi-do (KR); LEE, Junhyung, 17084 Yongin-Si, Gyeonggi-do (KR); KIM, Jihwan, 17084 Yongin-Si, Gyeonggi-do (KR); ROH, Heyoungcheoul, 17084 Yongin-Si, Gyeonggi-do (KR); BAE, Chaeeun, 17084 Yongin-Si, Gyeonggi-do (KR); LEE, Jungwoo, 17084 Yongin-Si, Gyeonggi-do (KR); KIM, Misol, 17084 Yongin-Si, Gyeonggi-do (KR); YOON, Jihwan, 17084 Yongin-Si, Gyeonggi-do (KR)
(74) Representative: Gulde & Partner

(57) **Abstract**

A secondary battery (10) includes: an electrode assembly (210); a case body (110) accommodating the electrode assembly (210); a cap plate (120) sealing an opening of the case body (110); and a positive electrode terminal (130_1) and a negative electrode terminal (130_2), each of the positive electrode terminal (130_1) and the negative electrode terminal (130_2) being electrically connected to the electrode assembly (210), coupled to the cap plate (120), and protruding in a first direction (D1) from an upper surface of the cap plate (120). The cap plate (120) includes a vent portion (122) located between the positive electrode terminal (130_1) and the negative electrode terminal (130_2). A first length of the case body (110) in the first direction (D1) is longer than a second length of the case body (110) in a second direction (D2) perpendicular to the first direction (D1), and the second length is longer than a third length of the case body (110) in a third direction (D1) perpendicular to each of the first direction (D1) and the second direction (D2).

## Description

### BACKGROUND

### 1. Field

Aspects of embodiments of the present disclosure relate to a secondary battery, and a method for manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

As the secondary battery proceeds with charging and/or discharging, gas may be generated inside the secondary battery. In this case, the internal gas may cause a deformation of the electrode assembly and the like, which may lead to a short circuit inside the electrode assembly. Accordingly, the safety of the secondary battery may be reduced.

The above information disclosed in this Background section is for enhancement of understanding of the background of the present disclosure, and therefore, it may contain information that does not constitute related (or prior) art.

### SUMMARY.

The invention is defined by the appended claims. The description that follows is subjected to this limitation. Any disclosure lying outside the scope of said claims is only intended for illustrative as well as comparative purposes.

Embodiments of the present disclosure may be directed to a secondary battery having improved safety, and a method for manufacturing the secondary battery.

These and other aspects and features of the present disclosure will be described in or will be apparent from the following description of embodiments of the present disclosure.

According to one or more embodiments of the present disclosure, a secondary battery includes: an electrode assembly including a positive electrode, a negative electrode, and a separator interposed between the positive electrode and the negative electrode; a case body accommodating the electrode assembly; a cap plate sealing an opening of the case body; and a positive electrode terminal and a negative electrode terminal, each of the positive electrode terminal and the negative electrode terminal being electrically connected to the electrode assembly, coupled to the cap plate, and protruding in a first direction from an upper surface of the cap plate. The cap plate includes a vent portion located between the positive electrode terminal and the negative electrode terminal. A first length of the case body in the first direction is longer than a second length of the case body in a second direction perpendicular to the first direction, and the second length is longer than a third length of the case body in a third direction perpendicular to each of the first direction and the second direction.

In other words, the battery may have a narrow case body (housing) whose height (first length of the case body along the first direction) is significantly greater than its width (second length of the case body along the second direction), with both height and width being significantly greater than its depth (third length of the case body along the third direction) (first length of the case body >> second length of the case body >> third length of the case body). The first direction may run along the longitudinal extension of the battery (the greatest extension of the case body, i.e., from the bottom to the top of the battery). The second direction may run transversely to the height and may correspond to the greater of the two horizontal extensions of the case body (defines the width direction of the battery). The third direction may run both transversely to the height and width and corresponds to the smaller of the two horizontal dimensions of the case body. In other words, the depth may define the thickness of the battery. In the intended use of the battery (e.g., when installed in a battery pack or device), the battery may be arranged so that the first direction (height) runs vertically, the second direction (width) runs horizontally, and the third direction (depth) runs horizontally. In other words, the case may have a two oppositely arranged main surfaces each extending along the first direction and the second direction. It represents the largest contiguous surface of the housing and borders the narrow side surfaces as well as the narrow top and bottom surfaces.

In an embodiment, a ratio of the first length of the case body to the second length of the case body may be greater than 1 and less than 3. The selected ratio ensures electrical contact on the narrow top surface, while at the same time keeping the main surface as large as possible for reliable heat dissipation and mechanical stability.

In an embodiment, a ratio of the first length of the case body to the second length of the case body may be greater than 1.5 and less than 3.

In an embodiment, a ratio of the first length of the case body to the second length of the case body may be greater than 2 and less than 3.

In an embodiment, a ratio of the first length of the case body to the second length of the case body may be greater than 2.4 and less than 2.8.

In an embodiment, a ratio of the second length of the case body to the third length of the case body may be greater than 2 and less than 10. This ensures a shallow depth so that the cells can be stacked tightly in a pack.

In an embodiment, a ratio of the second length of the case body to the third length of the case body may be greater than 2 and less than 8.

In an embodiment, a ratio of the second length of the case body to the third length of the case body may be greater than 3 and less than 5.

In an embodiment, a length of the cap plate in the first direction (in other words, its thickness) may be from 0.5 mm to 3.0 mm.

In an embodiment, a length of the cap plate in the first direction may be from 1.0 mm to 3.0 mm.

In an embodiment, a length of the cap plate in the first direction may be from 1.5 mm to 3.0 mm.

In an embodiment, a length of the cap plate in the first direction may be from 2.0 mm to 3.0 mm.

In an embodiment, an area of upper surfaces of the positive electrode terminal and the negative electrode terminal may be from 20% to 50% of an area of the upper surface of the cap plate. The upper surfaces may refer to the surfaces of the terminals that are not covered (by the cap plate) and are available for electrical contact (effective surface for electrical contat).

In an embodiment, the area of upper surfaces of the positive electrode terminal and the negative electrode terminal may be from 30% to 45% of an area of the upper surface of the cap plate.

In an embodiment, the area of upper surfaces of the positive electrode terminal and the negative electrode terminal may be from 35% to 40% of an area of the upper surface of the cap plate.

In an embodiment, an area of an upper surface of the vent portion may be from 10% to 50% of an area of the upper surface of the cap plate. The upper surface may refer to the surface of the vent portion that is not covered (by the cap plate) and is available for venting (effective surface for venting).

In an embodiment, the area of the upper surface of the vent portion may be from 20% to 45% of an area of the upper surface of the cap plate.

In an embodiment, the area of the upper surface of the vent portion may be from 30% to 40% of an area of the upper surface of the cap plate.

In an embodiment, the area of the upper surface of the vent portion may be from 35% to 40% of an area of the upper surface of the cap plate.

In an embodiment, the vent portion may be spaced from each of the positive electrode terminal and the negative electrode terminal.

In an embodiment, the vent portion may include: a first region extending in the second direction; and a second region extending in the third direction.

In an embodiment, a first part (e. g. the first region) of the vent portion may protrude in the third direction relative to the remaining part of the vent portion. A second part (e. g. the second region) may protrude in the second direction relative to the remaining part of the vent portion (and also relative to the first part).

In an embodiment, at least a portion of the first region and at least a portion of the second region may cross each other.

In an embodiment, the vent portion may have the shape of a cross.

In an embodiment, a length of the first region in the second direction may be equal to or longer than a length of the second region in the third direction.

In an embodiment, the vent portion may include: a first notch extending in the second direction in the first region; and a second notch extending in the third direction in the second region. The first notch and the second notch may cross each other.

In an embodiment, edges of the vent portion may have a rounded shape.

In an embodiment, a shape of the vent portion may be circular.

In an embodiment, a length of the vent portion in the second direction may be equal to or shorter than a length of at least one of the positive electrode terminal or the negative electrode terminal in the second direction.

In an embodiment, the vent portion may include: a first vent portion extending in the second direction; and a second vent portion extending in the second direction, and spaced from the first vent portion in the third direction. In other words, in an embodiment, the vent portion may include a plurality of vent portions, wherein the vent portions of the plurality of vent portions may be spaced apart from each other. This provides connecting areas within the cap plate, which are arranged between the multiple vent portions and continue to ensure the mechanical stability of the cap plate, while at the same time allowing the vent portions to continue to perform their function reliably.

In an embodiment, the vent portion may include a notch corresponding to a shape of the vent portion.

According to one or more embodiments of the present disclosure, a method for manufacturing a secondary battery includes: preparing an electrode assembly including a positive electrode, a negative electrode, and a separator interposed between the positive electrode and the negative electrode; accommodating the electrode assembly in a case body; coupling a positive electrode terminal and a negative electrode terminal to a cap plate to electrically connect to the electrode assembly, the positive electrode terminal and the negative electrode terminal protruding in a first direction from an upper surface of the cap plate; and coupling the cap plate to the case body to seal an opening of the case body. The cap plate includes a vent portion between the positive electrode terminal and the negative electrode terminal. A first length of the case body in the first direction is longer than a second length of the case body in a second direction perpendicular to the first direction, and the second length of the case body is longer than a third length of the case body in a third direction perpendicular to each of the first and second directions.

In an embodiment, the vent portion may include: a first region extending in the second direction; and a second region extending in the third direction.

In an embodiment, at least a portion of the first region and at least a portion of the second region may cross each other.

In an embodiment, a length of the first region in the second direction may be equal to or longer than a length of the second region in the third direction.

In an embodiment, the vent portion may include a notch corresponding to a shape of the vent portion.

According to some embodiments of the present disclosure, a positive electrode terminal, a negative electrode terminal, and a vent portion may be disposed on an upper surface of a secondary battery having a width that is relatively narrower compared to its height. Accordingly, if an internal pressure of the secondary battery increases, the vent portion may rupture so that internal gas may be easily discharged. In addition, even if the internal gas is discharged, the secondary battery may not pop upward. Thus, secondary damage due to an increase in the internal pressure of the secondary battery may be prevented or substantially prevented.

According to some embodiments of the present disclosure, by changing a shape and/or a number of the vent portion disposed between the positive electrode terminal and the negative electrode terminal, an area of the vent portion may be increased. Accordingly, the area of the vent portion used for a rupture may be secured. Further, according to some embodiments of the present disclosure, while securing the area of the vent portion, the shape and/or the number of the vent portion may be modified, thus ensuring a higher degree of freedom in designing the secondary battery.

Tall cells (i.e., cells with a form factor that is narrow in relation to their height) have limited space in the upper area, which requires, for example, a vent at the bottom of the case. The vent in a cell serves to relieve the internal pressure caused by gases generated during charging/discharging or in the event of a short circuit. However, if the vent is located on the bottom and the cell is installed in an electric vehicle with the bottom facing down, the release of internal pressure can cause problems. In other words, the present disclosure may provide a secondary battery in which the vent increases the vent area in the thickness direction of the cap plate, allowing the vent to be positioned at the top of the case body. As a result, it is possible to secure sufficient vent area while mitigating issues that may arise during vent rupture.

However, aspects and features of the present disclosure are not limited to those described above, and other aspects and features not mentioned will be clearly understood by a person skilled in the art from the detailed description, described below.

### BRIEF DESCRIPTION OF THE DRAWINGS.

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an example of a secondary battery according to an embodiment of the present disclosure.
FIG. 2 is a cross-sectional view illustrating an example of a secondary battery according to an embodiment of the present disclosure.
FIG. 3 is a plan view illustrating an example of a cap plate having a vent portion according to an embodiment of the present disclosure.
FIG. 4 is a plan view illustrating an example of a cap plate having a vent portion according to an embodiment of the present disclosure.
FIG. 5 is a plan view illustrating an example of a cap plate having a vent portion according to an embodiment of the present disclosure.
FIG. 6 is a plan view illustrating an example of a cap plate having a vent portion according to an embodiment of the present disclosure.
FIG. 7 is a plan view illustrating an example of a cap plate having a vent portion according to an embodiment of the present disclosure.
FIG. 8 is a flowchart illustrating an example of a method for manufacturing a secondary battery according to an embodiment of the present disclosure.

### DETAILED DESCRIPTION.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the drawings, sizes and relative sizes of layers and regions may be exaggerated for convenience of illustration. In other words, the sizes shown in the drawings are provided for convenience of illustration and are not limited thereto. In addition, throughout the specification and figures, the same reference numerals may refer to the same or substantially the same components.

As used herein, a secondary battery may correspond to a tall cell. The tall cell may refer to a secondary battery having a width that is relatively narrower compared to its height. In a comparative tall cell, because a top surface area of a cap plate may be small, a vent portion may be placed on a bottom surface of a case body opposite the cap plate. In such a case, if the vent portion ruptures under internal gas pressure of the secondary battery, the secondary battery may pop upward under the gas pressure. As a result, secondary damage may occur to surrounding components due to an explosion of the secondary battery.

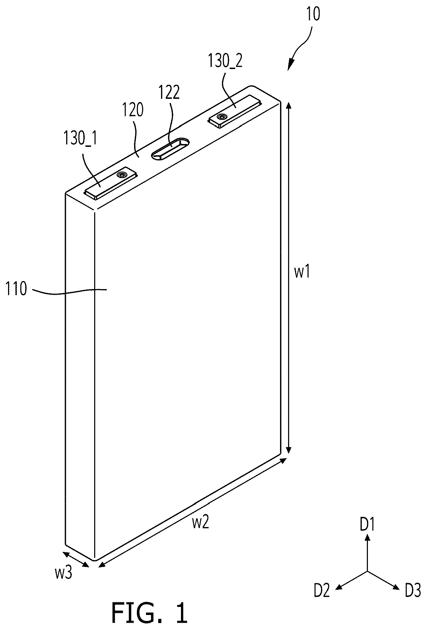

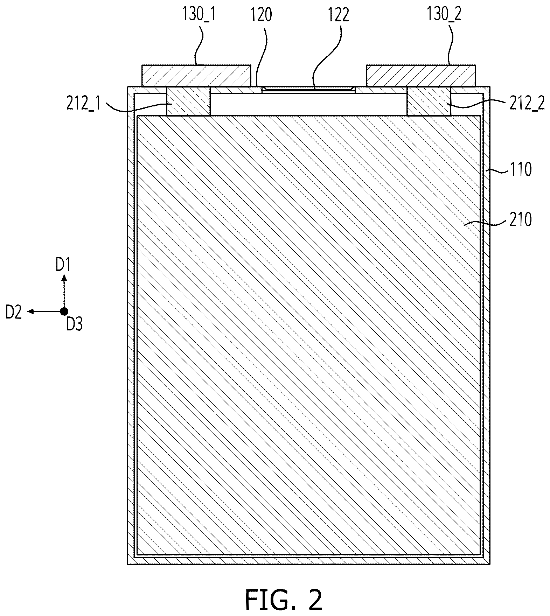

FIG. 1 illustrates an example of a secondary battery 10 according to an embodiment of the present disclosure. FIG. 2 is a cross-sectional view illustrating an example of the secondary battery 10 according to an embodiment of the present disclosure.

Referring to FIGS. 1 and 2, the secondary battery 10 according to one or more embodiments of the present disclosure may include at least one electrode assembly 210 wound with a separator as an insulator between the positive electrode and the negative electrode, a case 110 in which the electrode assembly 210 is received (or accommodated) therein, and a cap plate 120 coupled to an opening of the case 110 (e. g. at a top of the battery 10).

Each of the positive electrode and the negative electrode may include a current collector made of a thin metal foil having a coated portion on which an active material is coated and an uncoated portion on which an active material is not coated.

The positive electrode and the negative electrode are wound after interposing the separator, which is an insulator, therebetween. However, the present disclosure is not limited thereto, and the electrode assembly 210 may have a structure in which a positive electrode and a negative electrode, each made of a plurality of sheets, are alternately stacked with a separator interposed therebetween.

The case 110 may form the overall outer appearance of the secondary battery 10 and may be made of a conductive metal, such as aluminum, aluminum alloy, or nickel-plated steel. In addition, the case 110 may provide a space in which the electrode assembly 210 is accommodated.

The case 110 and the cap plate 120 may be made of a conductive material. The positive and negative electrode terminals 130_1 and 130_2 electrically connected to the positive electrode and the negative electrode, respectively, may be installed to penetrate (or extend through) the cap plate 120 and protrude outwardly therethrough.

In addition, outer peripheral surfaces (e.g., circumferential surfaces) of upper pillars of the positive and negative electrode terminals 130_1 and 130_2 protruding outwardly from the cap plate 120 may have a rivet structure and may be riveted or welded to the cap plate 120.

In addition, the cap plate 120 may be made of a thin plate and may be coupled to the opening in the case 110, and an electrolyte injection port into which a sealing stopper may be installed may be located (e.g., formed) in the cap plate 120, and a vent portion 122 having a notch may be installed.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

In an embodiment, the electrode assembly 210 may be electrically connected to a positive electrode terminal 130_1 and a negative electrode terminal 130_2. For example, a positive electrode tab 212_1 connected to the positive electrode of the electrode assembly 210 may be connected to the positive electrode terminal 130_1. A negative electrode tab 212_2 connected to the negative electrode of the electrode assembly 210 may be connected to the negative electrode terminal 130_2. As another example, the positive electrode terminal 130_1 and the negative electrode terminal 130_2 may be electrically connected to a positive current collector and a negative current collector, respectively, which may be welded to positive and negative uncoated portions.

In an embodiment, the positive electrode terminal and the negative electrode terminal 130_1 and 130_2 may be coupled to the cap plate 120 so as to protrude outward (e.g., in the first direction D1) from an upper surface of the cap plate 120. For example, the positive electrode terminal and the negative electrode terminal 130_1 and 130_2 may protrude from the upper surface of the cap plate 120 at the same or substantially the same height as each other.

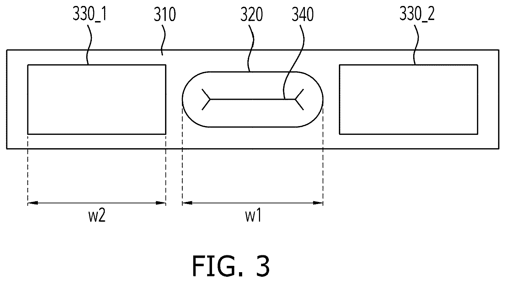

In an embodiment, the cap plate 120 may include a vent portion 122 located between the positive electrode terminal and the negative electrode terminal 130_1 and 130_2. A notch for inducing a rupture of the vent portion 122 may be formed. Accordingly, if (e.g., when) the pressure (e.g., internal gas pressure) inside the case body 110 rises due to a thermal runaway in the secondary battery 10, the vent portion 122 may rupture. Thus, gas inside the case body 110 may be discharged to the outside of the secondary battery 10. Examples of the vent portion 122 will be described in more detail below with reference to FIGS. 3 to 7.

In an embodiment, a first length w1 of the case body 110 in the first direction D1 may be longer than a second length w2 of the case body 110 in the second direction D2. The first direction D1 may be perpendicular to or substantially perpendicular to the second direction D2. In addition, the second length w2 of the case body 110 may be longer than a third length w3 of the case body 110 in the third direction D3. The third direction D3 may be perpendicular to or substantially perpendicular to each of the first direction D1 and the second direction D2. The first length w1 of the case body 110 may extent between the bottom to the top of the case body 110. The second length w2 of the case body 110 may extent between the side surfaces of the case body 110. The third length w3 of the case body 110 may extent between the two opposite side main surfaces of the case body 110.

In an embodiment, the secondary battery 10 may correspond to a tall cell. The tall cell may refer to a secondary battery having a width that is relatively narrower compared to its height. Referring to FIG. 1, a ratio of the first length w1 of the case body 110 to the second length w2 of the case body 110 may be greater than 1. In more detail, the ratio of w1 to w2 may be greater than 1 and less than 3, but the present disclosure is not limited thereto. In addition, a length of the cap plate 120 in the first direction D1 may be from 0.5 mm to 3.0 mm.

The secondary battery 10 may be a lithium secondary battery, a sodium secondary battery, or the like. However, the present disclosure is not limited thereto, and the secondary battery 10 may include any suitable kind of battery capable of repeatedly supplying electricity by charging and discharging. In an embodiment, if (e.g., when) the secondary battery 10 is a lithium secondary battery, it may be used in an electric vehicle (EV) due to its excellent lifespan characteristics and high-rate characteristics. For example, it may be used in a hybrid vehicle, such as a plug-in hybrid electric vehicle (PHEV). In addition, a lithium secondary battery may be used in various fields desiring a large amount of power storage, for example, such as electric bicycles, power tools, and energy storage systems (ESS).

As described above, a positive electrode terminal, a negative electrode terminal, and a vent portion may be disposed on the upper surface (e. g. the top) of a secondary battery having a width that is relatively narrower compared to its height. Accordingly, as the internal pressure of the secondary battery increases and the vent portion ruptures, internal gas may be discharged easily. In addition, even if (e.g., when) the internal gas is discharged, the secondary battery may not pop upward. Thus, secondary damage due to an increase in the internal pressure of the secondary battery may be prevented or substantially prevented.

FIG. 3 is a plan view illustrating an example of a cap plate 310 having a vent portion 320 according to an embodiment of the present disclosure.

In an embodiment, a positive electrode terminal 330_1 and a negative electrode terminal 330_2 protruding outward from an upper surface of the cap plate 310 may be coupled to the cap plate 310. In addition, the cap plate 310 may include a vent portion 320 located between the positive electrode terminal 330_1 and the negative electrode terminal 330_2. The vent portion 320 may be disposed so as to be spaced apart from each of the positive electrode terminal 330_1 and the negative electrode terminal 330_2.

In an embodiment, an area of upper surfaces of the positive electrode terminal 330_1 and the negative electrode terminal 330_2 (e.g., the sum of the areas of the upper surfaces of the positive electrode terminal 330_1 and the negative electrode terminal 330_2) may be from 20% to 50% of an area of the upper surface of the cap plate 310. In addition, an area of the upper surface of the vent portion 320 may be from 10% to 50% of the area of the upper surface of the cap plate 310. Furthermore, the area of the upper surfaces of the positive electrode terminal 330_1 and the negative electrode terminal 330_2 may be from 40% to 500% of the area of the upper surface of the vent portion 320.

In an embodiment, edges of the vent portion 320 may be formed in a rounded shape. Accordingly, if (e.g., when) the internal pressure increases, the pressure may not concentrate at the edges of the vent portion 320. In addition, the vent portion 320 may include a notch 340 formed so as to correspond to the shape of the vent portion 320. For example, referring to FIG. 3, if (e.g., when) the vent portion 320 has an elongated slot shape in a lateral direction, the notch 340 may be formed to extend in the lateral direction.

In an embodiment, a length w1 of the vent portion 320 in a lateral direction (e.g., the D2 direction of FIG. 1) may be equal to or shorter than a length w2 of the positive electrode terminal 330_1 in the lateral direction. Similarly, the length w1 of the vent portion 320 in the lateral direction may be equal to or shorter than the length of the negative electrode terminal 330_2 in the lateral direction.

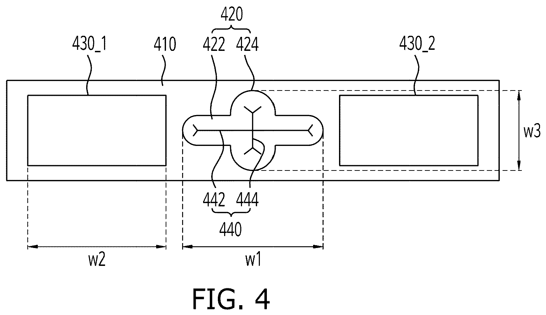

FIG. 4 is a plan view illustrating an example of a cap plate 410 having a vent portion 420 according to an embodiment of the present disclosure.

In an embodiment, a positive electrode terminal 430_1 and a negative electrode terminal 430_2 protruding outward from an upper surface of the cap plate 410 may be coupled to the cap plate 410. In addition, the cap plate 410 may include a vent portion 420 located between the positive electrode terminal 430_1 and the negative electrode terminal 430_2. The vent portion 420 may be disposed so as to be spaced apart from each of the positive electrode terminal 430_1 and the negative electrode terminal 430_2.

In an embodiment, an area of upper surfaces of the positive electrode terminal 430_1 and the negative electrode terminal 430_2 (e.g., the sum of the areas of the upper surfaces of the positive electrode terminal 430_1 and the negative electrode terminal 430_2) may be from 20% to 50% of an area of the upper surface of the cap plate 410. In addition, an area of the upper surface of the vent portion 420 may be from 10% to 50% of the area of the upper surface of the cap plate 410. Furthermore, the area of the upper surfaces of the positive electrode terminal 430_1 and the negative electrode terminal 430_2 may be from 40% to 500% of the area of the upper surface of the vent portion 420.

In an embodiment, the vent portion 420 may include a first region 422 extending in a lateral direction (e.g., the D2 direction of FIG. 1), and a second region 424 extending in a vertical direction (e.g., the D3 direction of FIG. 1). At least a portion of the first region 422 and at least a portion of the second region 424 may cross or intersect each other. For example, the center of the first region 422 and the center of the second region 424 may cross or intersect each other. Accordingly, the shape of the vent portion 420 may be a cross (+) shape, but the present disclosure is not limited thereto. The first region 422 may correspond to the entire extent of the vent portion 420 in the lateral direction (in other words, a length w1 of the first region 422) and the second region may correspond to the entire extent of the vent portion 420 in the depth direction (e.g., the D3 direction of FIG. 1) (in other words, a length w3 of the second region 424).

In an embodiment, the vent portion 420 may include a notch 440. In more detail, the notch 440 may include a first notch 442 formed to extend in the lateral direction in the first region 422, and a second notch 444 formed to extend in the vertical direction in the second region 424. The notch 440 may be formed so as to correspond to the shape of the vent portion 420. For example, the first notch 442 and the second notch 444 may cross or intersect each other. Accordingly, the shape of the notch 440 may be a cross (+) shape, but the present disclosure is not limited thereto.

In an embodiment, a length w1 of the vent portion 420 in the lateral direction may be equal to or shorter than a length w2 of the positive electrode terminal 430_1 in the lateral direction. Similarly, the length w1 of the vent portion 420 in the lateral direction may be equal to or shorter than a length of the negative electrode terminal 430_2 in the lateral direction.

In an embodiment, the length w1 of the first region 422 in the lateral direction may be equal to or longer than the length w3 of the second region 424 in the vertical direction. In addition, the length w3 of the second region 424 in the vertical direction may be equal to or greater than the length of the positive electrode terminal 430_1 or the negative electrode terminal 430_2 in the vertical direction. As another example, the length w3 of the second region 424 in the vertical direction may be smaller than the length of the positive electrode terminal 430_1 or the negative electrode terminal 430_2 in the vertical direction.

As described above, by changing the shape of the vent portion disposed between the positive electrode terminal and the negative electrode terminal, its area may be increased. Accordingly, the area of the vent portion used for a rupture may be secured. Further, according to some embodiments of the present disclosure, it may be possible to ensure a high degree of freedom in designing the secondary battery in that the shape of the vent portion may be variously modified while securing its area.

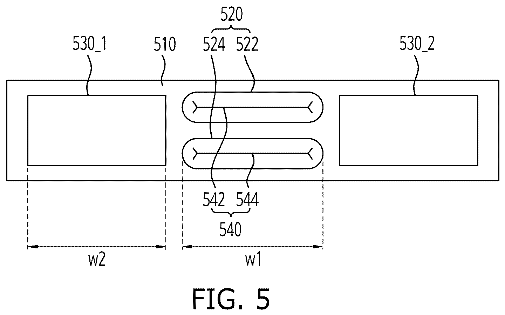

FIG. 5 is a plan view illustrating an example of a cap plate 510 having a vent portion 520 according to an embodiment of the present disclosure.

In an embodiment, a positive electrode terminal 530_1 and a negative electrode terminal 530_2 protruding outward from an upper surface of the cap plate 510 may be coupled to the cap plate 510. In addition, the cap plate 510 may include a vent portion 520 located between the positive electrode terminal 530_1 and the negative electrode terminal 530_2. The vent portion 520 may be disposed so as to be spaced apart from each of the positive electrode terminal 530_1 and the negative electrode terminal 530_2.

In an embodiment, an area of upper surfaces of the positive electrode terminal 530_1 and the negative electrode terminal 530_2 (e.g., the sum of the areas of the upper surfaces of the positive electrode terminal 530_1 and the negative electrode terminal 530_2) may be from 20% to 50% of an area of the upper surface of the cap plate 510. In addition, an area of the upper surface of the vent portion 520 may be from 10% to 50% of the area of the upper surface of the cap plate 510. Furthermore, the area of the upper surfaces of the positive electrode terminal 530_1 and the negative electrode terminal 530_2 may be from 40% to 500% of the area of the upper surface of the vent portion 520.

In an embodiment, the vent portion 520 may include a plurality of vent portions. In more detail, the vent portion 520 may include a first vent portion 522 extending in a lateral direction (e.g., the D2 direction of FIG. 1), and a second vent portion 524 extending in the lateral direction and disposed in the vertical direction (e.g., the D3 direction of FIG. 1) with respect to (e.g., relative to) the first vent portion 522. Edges of each of the first vent portion 522 and the second vent portion 524 may be formed in a rounded shape. In FIG. 5, the number of the plurality of vent portions is illustrated as two, but the present disclosure is not limited thereto.

In an embodiment, the vent portion 520 may include a notch formed so as to correspond to the shape of the vent portion 520. For example, referring to FIG. 5, if (e.g., when) each of the first vent portion 522 and the second vent portion 524 has an elongated slot shape in the lateral direction, a first notch 542 that is formed to be elongated in the lateral direction may be formed in the first vent portion 522, and a second notch 544 that is formed to be elongated in the lateral direction may be formed in the second vent portion 524.

In an embodiment, a length w1 of the vent portion 520 in the lateral direction may be equal to or shorter than a length w2 of the positive electrode terminal 530_1 in the lateral direction. Similarly, the length w1 of the vent portion 520 in the lateral direction may be equal to or shorter than the length of the negative electrode terminal 530_2 in the lateral direction.

In FIG. 5, the shapes of the first vent portion 522 and the second vent portion 524 are shown as being the same or substantially the same as each other, but the present disclosure is not limited thereto, and at least one of the lateral direction length, the vertical direction length, or the shape of the first vent portion 522 may be different from that of the second vent portion 524.

As described above, by changing the number of vent portions disposed between the positive electrode terminal and the negative electrode terminal, the area may be increased. Accordingly, the area of the vent portion used for a rupture may be secured. Further, according to some embodiments of the present disclosure, it may be possible to ensure a high degree of freedom in designing the secondary battery in that the number of vent portions may be variously modified while securing the area of the vent portion.

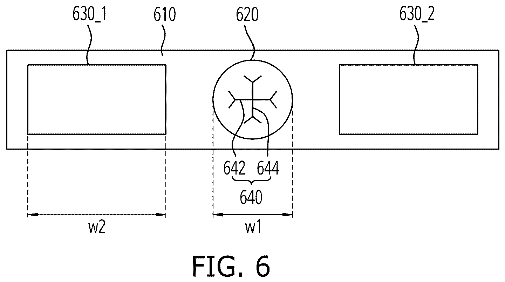

FIG. 6 is a plan view illustrating an example of a cap plate 610 having a vent portion 620 according to an embodiment of the present disclosure.

In an embodiment, a positive electrode terminal 630_1 and a negative electrode terminal 630_2 protruding outward from an upper surface of the cap plate 610 may be coupled to the cap plate 610. In addition, the cap plate 610 may include a vent portion 620 located between the positive electrode terminal 630_1 and the negative electrode terminal 630_2. The vent portion 620 may be disposed so as to be spaced apart from each of the positive electrode terminal 630_1 and the negative electrode terminal 630_2.

In an embodiment, an area of upper surfaces of the positive electrode terminal 630_1 and the negative electrode terminal 630_2 (e.g., the sum of the areas of the upper surfaces of the positive electrode terminal 630_1 and the negative electrode terminal 630_2) may be from 20% to 50% of an area of the upper surface of the cap plate 610. In addition, an area of the upper surface of the vent portion 620 may be from 10% to 50% of the area of the upper surface of the cap plate 610. Furthermore, the area of the upper surfaces of the positive electrode terminal 630_1 and the negative electrode terminal 630_2 may be from 40% to 500% of the area of the upper surface of the vent portion 620.

In an embodiment, the shape of the vent portion 620 may be circular. In this case, the vent portion 620 may include a plurality of notches 640. For example, the vent portion 620 may include a first notch 642 formed to extend in a lateral direction (e.g., the D2 direction of FIG. 1), and a second notch 644 formed to extend in a vertical direction (e.g., the D3 direction of FIG. 1). The first notch 642 and the second notch 644 may cross or intersect each other. In FIG. 6, the number of notches 640 is illustrated as two, but the present disclosure is not limited thereto, and additional notches may be formed in the vent portion 620.

In an embodiment, a length w1 of the vent portion 620 in the lateral direction may be equal to or shorter than a length w2 of the positive electrode terminal 630_1 in the lateral direction. Similarly, the length w1 of the vent portion 620 in the lateral direction may be equal to or shorter than a length of the negative electrode terminal 630_2 in the lateral direction.

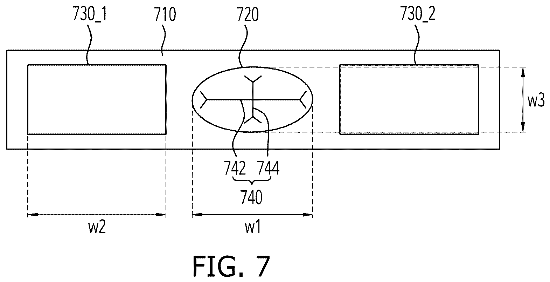

FIG. 7 is a plan view illustrating an example of a cap plate 710 having a vent portion 720 according to an embodiment of the present disclosure.

In an embodiment, a positive electrode terminal 730_1 and a negative electrode terminal 730_2 protruding outward from an upper surface of the cap plate 710 may be coupled to the cap plate 710. In addition, the cap plate 710 may include a vent portion 720 located between the positive electrode terminal 730_1 and the negative electrode terminal 730_2. The vent portion 720 may be disposed so as to be spaced apart from each of the positive electrode terminal 730_1 and the negative electrode terminal 730_2.

In an embodiment, an area of upper surfaces of the positive electrode terminal 730_1 and the negative electrode terminal 730_2 (e.g., the sum of the areas of the upper surfaces of the positive electrode terminal 730_1 and the negative electrode terminal 730_2) may be from 20% to 50% of an area of the upper surface of the cap plate 710. In addition, an area of the upper surface of the vent portion 720 may be from 10% to 50% of the area of the upper surface of the cap plate 710. Furthermore, the area of the upper surfaces of the positive electrode terminal 730_1 and the negative electrode terminal 730_2 may be from 40% to 500% of the area of the upper surface of the vent portion 720.

In an embodiment, the shape of the vent portion 720 may be an oval. In this case, the vent portion 720 may include a plurality of notches 740. For example, the vent portion 720 may include a first notch 742 formed to extend in a lateral direction (e.g., the D2 direction of FIG. 1), and a second notch 744 formed to extend in a vertical direction (e.g., the D3 direction of FIG. 1). The first notch 742 and the second notch 744 may cross or intersect each other.

In an embodiment, a length w1 of the vent portion 720 in the lateral direction may be equal to or shorter than a length w2 of the positive electrode terminal 730_1 in the lateral direction. Similarly, the length w1 of the vent portion 720 in the lateral direction may be equal to or shorter than the length of the negative electrode terminal 730_2 in the lateral direction.

In an embodiment, the length w1 of the vent portion 720 in the lateral direction may be longer than the length w3 of the vent portion 720 in the vertical direction. In addition, the length w3 of the vent portion 720 in the vertical direction may be equal to or greater than the length of the positive electrode terminal 730_1 or the negative electrode terminal 730_2 in the vertical direction. As another example, the length w3 of the vent portion 720 in the vertical direction may be smaller than the length of the positive electrode terminal 730_1 or the negative electrode terminal 730_2 in the vertical direction.

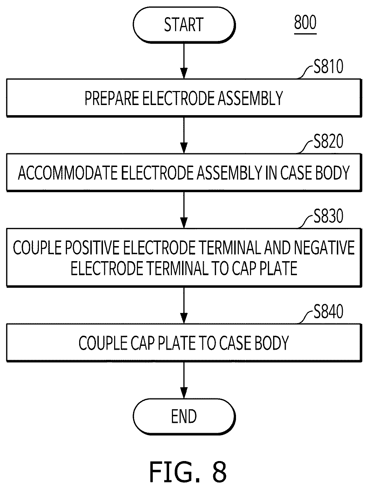

FIG. 8 is a flowchart illustrating an example of a method 800 for manufacturing a secondary battery according to an embodiment of the present disclosure.

In an embodiment, the method 800 for manufacturing a secondary battery may start, and an electrode assembly may be prepared (step S810). The electrode assembly may include a positive electrode, a negative electrode, and a separator interposed between the positive electrode and the negative electrode. The electrode assembly may be accommodated in a case body (step S820).

A positive electrode terminal and a negative electrode terminal may be coupled to a cap plate (step S830). Each of the positive electrode terminal and the negative electrode terminal may be electrically connected to the electrode assembly, and may each protrude in a first direction from an upper surface of the cap plate. In addition, the cap plate may be coupled to the case body (step S840), so as to seal an opening of the case body, and the method 800 may end.

In an embodiment, a first length of the case body in the first direction may be longer than a second length of the case body in a second direction perpendicular to or substantially perpendicular to the first direction. Furthermore, the second length of the case body may be longer than a third length of the case body in a third direction perpendicular to or substantially perpendicular to each of the first and second directions. In addition, a ratio of the first length of the case body to the second length of the case body may be greater than 1 and less than 3.

In an embodiment, an area of upper surfaces of the positive electrode terminal and the negative electrode terminal may be from 20% to 50% of an area of an upper surface of the cap plate. In addition, an area of an upper surface of the vent portion may be from 10% to 50% of the area of the upper surface of the cap plate.

In an embodiment, the cap plate may include the vent portion located between the positive electrode terminal and the negative electrode terminal. The vent portion may be disposed so as to be spaced apart from each of the positive electrode terminal and the negative electrode terminal.

In an embodiment, the vent portion may include a first region extending in the second direction, and a second region extending in the third direction. At least a portion of the first region and at least a portion of the second region may cross or intersect each other. In addition, a length of the first region in the second direction may be equal to or longer than a length of the second region in the third direction.

In an embodiment, the vent portion may include a first notch formed to extend in the second direction in the first region, and a second notch formed to extend in the third direction in the second region. The first notch and the second notch may cross or intersect each other.

In an embodiment, edges of the vent portion may be formed in a rounded shape, and the shape of the vent portion may be circular. As another example, the shape of the vent portion may be at least one of an oval or a polygon.

In an embodiment, a length of the vent portion in the second direction may be equal to or shorter than a length of any one of the positive electrode terminal and/or the negative electrode terminal in the second direction. In addition, the vent portion may include a notch formed so as to correspond to a shape of the vent portion.

In an embodiment, the vent portion may include a plurality of vent portions. In more detail, the vent portion may include a first vent portion extending in the second direction, and a second vent portion extending in the second direction and disposed in the third direction of the first vent portion.

Although the present disclosure has been described above with respect to embodiments thereof, the present disclosure is not limited thereto. Various modifications and variations can be made thereto by those skilled in the art within the the present disclosure and the scope of the appended claims.

### DESCRIPTION OF SOME REFERENCE NUMERALS

10: secondary battery
110: case body
120: cap plate
122: vent portion
130_1: positive electrode terminal
130_2: negative electrode terminal

## Claims

1. A secondary battery (10) comprising:
an electrode assembly (210) comprising a positive electrode, a negative electrode, and a separator interposed between the positive electrode and the negative electrode;
a case body (110) accommodating the electrode assembly (210);
a cap plate (120) sealing an opening of the case body (110); and
a positive electrode terminal (130_1) and a negative electrode terminal (130_2), each of the positive electrode terminal (130_1) and the negative electrode terminal (130_2) being electrically connected to the electrode assembly (210), coupled to the cap plate (120), and protruding in a first direction (D1) from an upper surface of the cap plate (120),
wherein the cap plate (120) comprises a vent portion (122) located between the positive electrode terminal (130_1) and the negative electrode terminal (130_2),
wherein a first length of the case body (110) in the first direction (D1) is longer than a second length of the case body (110) in a second direction (D2) perpendicular to the first direction (D1), and
wherein the second length is longer than a third length of the case body (110) in a third direction (D3) perpendicular to each of the first direction (D1) and the second direction (D2).

2. The secondary battery (10) according to claim 1, wherein a ratio of the first length of the case body (110) to the second length of the case body (110) is greater than 1 and less than 3.

3. The secondary battery (10) according to claim 1 or 2, wherein a length of the cap plate (120) in the first direction (D1) is from 0.5 mm to 3.0 mm.

4. The secondary battery (10) according to any one of claims 1 to 3, wherein an area of upper surfaces of the positive electrode terminal (130_1) and the negative electrode terminal (130_2) is from 20% to 50% of an area of the upper surface of the cap plate (120).

5. The secondary battery (10) according to any one of claims 1 to 4, wherein an area of an upper surface of the vent portion (122) is from 10% to 50% of an area of the upper surface of the cap plate (120).

6. The secondary battery (10) according to any one of claims 1 to 5, wherein the vent portion (122) is spaced from each of the positive electrode terminal (130_1) and the negative electrode terminal (130_2).

7. The secondary battery (10) according to any one of claims 1 to 6, wherein the vent portion (420) comprises:
a first region (422) extending in the second direction (D2); and
a second region (424) extending in the third direction (D3).

8. The secondary battery (10) according to claim 7, wherein at least a portion of the first region (422) and at least a portion of the second region (424) cross each other.

9. The secondary battery (10) according to claim 7 or 8, wherein a length of the first region (422) in the second direction (D2) is equal to or longer than a length of the second region (424) in the third direction (D3).

10. The secondary battery (10) according to any one of claims 7 to 9, wherein the vent portion (420) comprises:
a first notch (442) extending in the second direction (D2) in the first region (422); and
a second notch (444) extending in the third direction (D3) in the second region (424), and
wherein the first notch (442) and the second notch (444) cross each other.

11. The secondary battery (10) according to any one of claims 1 to 10, wherein edges of the vent portion (320) have a rounded shape.

12. The secondary battery (10) according to any one of claims 1 to 11, wherein a shape of the vent portion (620) is circular.

13. The secondary battery (10) according to any one of claims 1 to 12, wherein a length of the vent portion (122) in the second direction (D2) is equal to or shorter than a length of at least one of the positive electrode terminal (130_1) and the negative electrode terminal (130_2) in the second direction (D2).

14. The secondary battery (10) according to any one of claims 1 to 13, wherein the vent portion (520) comprises:
a first vent portion (522) extending in the second direction (D2); and
a second vent portion (524) extending in the second direction (D2), and spaced from the first vent portion (522) in the third direction (D3).

15. A method (800) for manufacturing a secondary battery (10), the method (800) comprising:
preparing (S810) an electrode assembly (210) comprising a positive electrode, a negative electrode, and a separator interposed between the positive electrode and the negative electrode;
accommodating (S820) the electrode assembly (210) in a case body (110);
coupling (S830) a positive electrode terminal (130_1) and a negative electrode terminal (130_2) to a cap plate (120) to electrically connect to the electrode assembly (210), the positive electrode terminal (130_1) and the negative electrode terminal (130_2) protruding in a first direction (D1) from an upper surface of the cap plate (120); and
coupling (S840) the cap plate (120) to the case body (110) to seal an opening of the case body (110),
wherein the cap plate (120) comprises a vent portion (122) between the positive electrode terminal (130_1) and the negative electrode terminal (130_2),
wherein a first length of the case body (110) in the first direction (D1) is longer than a second length of the case body (110) in a second direction (D2) perpendicular to the first direction (D1), and
wherein the second length is longer than a third length of the case body (110) in a third direction (D3) perpendicular to each of the first (D1) and second directions (D2).
